Europäisches Patentamt

European Patent Office

Office européen des brevets

(19)

(11) Veröffentlichungsnummer: **0 066 897**
**A1**

(12) # EUROPÄISCHE PATENTANMELDUNG

(21) Anmeldenummer: **82105076.2**

(51) Int. Cl.³: **A 23 N 5/00**

(22) Anmeldetag: **09.06.82**

(30) Priorität: **10.06.81 DE 3122997**

(43) Veröffentlichungstag der Anmeldung: **15.12.82**
Patentblatt 82/50

(84) Benannte Vertragsstaaten: **AT BE CH DE FR GB IT LI LU NL SE**

(71) Anmelder: **Probat-Werke von Gimborn GmbH & Co. KG, Reeser Strasse 94, D-4240 Emmerich 1 (DE)**

(72) Erfinder: **Vahland, Torsten, Freiligrathstrasse 4, D-2800 Bremen 1 (DE)**
Erfinder: **Schwarze, Helmut, Segelsbrück 27, D-2800 Bremen 44 (DE)**

(74) Vertreter: **Weickmann, Heinrich, Dipl.-Ing. et al, Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska Möhlstrasse 22, D-8000 München 86 (DE)**

(54) Verfahren zur Entfernung der Samenschalen von pflanzlichem Samengut und Vorrichtung zur Durchführung des Verfahrens.

(57) Verfahren zur Entfernung der Samenschalen von pflanzlichem Samengut, bei dem man die Randzonen des pflanzlichen Samengutes mit Dampf anquillt und dadurch die Samenschalen anreisst, danach das Samengut durch schnelles Trocknen schrumpft und die sich dabei ablösenden Samenschalen gleichzeitig und/oder in einem späteren Verfahrensschritt entfernt. Das Verfahren ermöglicht eine restlose und schonende Entfernung der Samenschalen.

EP 0 066 897 A1

PATENTANWÄLTE DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA

**0066897**

LACT

8000 MÜNCHEN 86
POSTFACH 860 820
MÜHLSTRASSE 22
TELEFON (089) 98 03 52
TELEX 5 22 621
TELEGRAMM PATENTWEICKMANN MÜNCHEN

**9. Juni 1982**

Verfahren zur Entfernung der Samenschalen von pflanzlichem Samengut und Vorrichtung zur Durchführung des
Verfahrens

Die Erfindung betrifft ein Verfahren zum Entfernen der
Samenschale von pflanzlichem Samen.

Pflanzliche Samen, wie etwa Reis, Nüsse, Erdnüsse, Mandeln, Hülsenfrüchte, Leinsamen, Sojabohnen, Ölsaaten und
Kaffeebohnen sind von Samenschalen eingeschlossen, die
eine Stärke von unter 1 mm besitzen. Beim Verzehr und bei
der Weiterverarbeitung sind diese Samenschalen meist unerwünscht und müssen entfernt werden. Dies erfolgt im
allgemeinen dadurch, daß die Samenschalen mechanisch
durch Reiben, Bürsten oder Walzen abgerieben werden.
Durch die mechanische Bearbeitung werden die Samenschalen
nicht vollständig abgetragen und der eigentliche Kern des
Samens beschädigt. Nach dieser Verfahrensweise ist es in
der Regel nicht möglich, eine vollständige Entfernung
der Samenschalen aus dem Produktionsstrom zu erreichen.

Bei anderen pflanzlichem Samengut, etwa bei Kaffeebohnen,
wird zwar eine Vorreinigung in den Erzeugerländern vorgenommen, die festhaftenden Silberhäutchen auf den Kaffeebohnen werden jedoch nur unvollständig entfernt. Die Silberhäutchen wurden bisher bei der Rohkaffeeveredelung und bei der Röstbehandlung des Kaffees mit weiterverarbeitet. Hierbei treten jedoch Probleme auf. Bei der Veredelung von Rohkaffee können die nicht entfernten Silberhäutchen die Leitungen verstopfen, Filterprobleme hervorrufen und Extraktionen erschweren. Beim Rösten des Kaffees können die noch vorhandenen Häutchen ein erhebliches Sicherheitsrisiko und Umweltproblem mit sich bringen. Durch den Röstvorgang können sich durch die vorhandenen Häutchen Glutnester in den Zyklonen bilden. Ferner verunreinigen die angekohlten Silberhäutchen die Umluft der Röster und die Abluft und sich mit Ursache für einen unangenehmen Geruch. Sie tragen damit zur aufwendigen Nachverbrennung der Röstabluft bei.

Die Aufgabe der Erfindung besteht daher in der Bereitstellung eines Verfahrens, durch das die vorstehend beschriebenen Nachteile vermieden werden können.

Gegenstand der Erfindung ist ein Verfahren zur Entfernung von Samenschalen von pflanzlichem Samengut, das dadurch gekennzeichnet ist, daß man die Randzonen des pflanzlichen Samengutes mit Dampf anquillt und dadurch die Samenschalen anreißt, danach das Samengut durch schnelles Trocknen schrumpft und die sich dabei ablösenden Samenschalen gleichzeitig und/oder in einem späteren Verfahrensschritt entfernt.

Es hat sich überraschenderweise gezeigt, daß durch das erfindungsgemäße Verfahren eine restlose und schonende Entfernung der Samenschalen möglich ist.

Nach dem erfindungsgemäßen Verfahren wird in einer ersten Stufe das Samengut kurzzeitig mit Dampf benetzt und somit die Randzonen angequollen. Durch die Quellung tritt eine Volumenvergrößerung des pflanzlichen Samens auf, wodurch die Samenschalen aufplatzen bzw. anreißen.
Der beim Quellvorgang eingesetzte Dampf ist im allgemeinen Wasserdampf. Daneben kann auch Dampf von Lösungsmitteln, deren Gemische oder ein Gemisch aus Lösungsmitteldampf und Wasserdampf, verwendet werden. Besonders bevorzugt ist Wasserdampf, der gesättigt bis leicht überhitzt vorliegt. Naßdampf kann verwendet werden, bringt jedoch im allgemeinen keine besonderen Vorteile. Die Dampfbehandlungsdauer hängt von der Quellfähigkeit des zu behandelnden Samengutes ab. Bei Behandlung von Rohkaffee ist eine Dampfbehandlungsdauer von 2 bis 10 Minuten zweckmäßig. Der Dampfzustand und die Dampfbehandlungsdauer beeinflussen die Quellwirkungen und damit den Ablöseeffekt der anhaftenden Samenschale. Bei zu langer Behandlung ist neben wirtschaftlichen Nachteilen eine vollständige Ablösung nicht mehr gewährleistet, da infolge verstärkter Kondensation von Wasserdampf sowie dann austretender, klebriger Sameninhaltsstoffe eine Verklebung gefördert wird.

Ferner können bei zu langer Behandlung wertvolle Sameninhaltsstoffe verloren gehen, was im allgemeinen vermieden werden muß.

Durch den Quellvorgang reißt zwar die Samenschale des pflanzlichen Gutes an, bleibt jedoch zunächst noch an der Oberfläche haften.

In der zweiten Stufe des erfindungsgemäßen Verfahrens wird daher das angequollene pflanzliche Gut einer schnellen Trocknung unterzogen. Durch den kurzzeitigen Trocknungsvorgang wird die Oberfläche von dem Wasser- bzw. Lösungsmittelfilm befreit, das Samengut schnell geschrumpft und die Samenschale dabei abgelöst. Die Trocknung mit gleichzeitiger Entfernung der Samenschale erfolgt vorzugsweise in Konvektionstrocknern unter Zufuhr von aufbereiteter Luft, wobei die Behandlungszeit, die Luftgeschwindigkeit und die Temperatur mit der Maßgabe aufeinander abgestimmt werden, daß keine Taupunkt-Unterschreitung eintritt und eine restlose Entfernung der Samenschalen erfolgt. Unter "Behandlungszeit" ist die Zeit der Behandlung mit Luft, unter "Luftgeschwindigkeit" bzw. "Temperatur" diejenige der zur Trocknung eingesetzten Luft zu verstehen. Eine Taupunkt-Unterschreitung, d. h. ein Zustand, bei dem unter den angegebenen Temperaturbedingungen die Sättigungskonzentration überschritten wird, würde neben der Verhinderung der Trocknung zu einer Kondensation von Wasser bzw. Lösungsmittel in den nachgeschalteten Anlageteilen, insbesondere der Zyklone führen, so daß Verstopfungsprobleme durch die ausgetragenen, an den Wandungen anhaftenden Samenschalen auftreten können. Die Aufnahmefähigkeit der Luft für Wasser bzw. Lösungsmittel hängt außer von der Temperatur auch von der Anfangskonzentration ab. Bei hoher Ausgangskonzentration sind entweder große Luftmengen oder lange Behandlungszeiten erforderlich. Da jedoch das Schrumpfen des pflanzlichen Gutes schnell vor sich gehen muß, sind Maßnahmen für kurze Behandlungszeiten erforderlich, um den gewünschten Ablöseeffekt zu erreichen. Im allgemeinen wird dies durch Vorwärmer und/oder Trocknung der Luft vor Eintritt in den Trockner erreicht. Die Behandlungszeit beträgt 2 bis 30 Minuten bei Temperaturen von 10 bis 150°C. Vorzugsweise wird zur Trocknung des pflanzlichen Gutes Luft mit einer Temperatur von 60 bis 90°C 5 bis 10 Minuten lang eingesetzt.

Die Trocknung erfolgt vorzugsweise in einem Fließbetttrockner, der mit pulsierendem Trockenmittel arbeitet. Durch das pulsierende Trockenmittel wird das Produkt kurzzeitig in ungeordnete Bewegung versetzt und dabei neben der Trocknung die Samenschalen ausgetragen. Durch diese Verwirbelung entsteht zusätzlich ein intensiver Reinigungseffekt.

Alternativ kann die Trocknung in einem Trommeltrockner erfolgen. Daneben ist auch eine Trocknung durch Brüdenabzug aus Kontakt- und/oder Strahlungstrockner möglich.

Durch die Quellbehandlung mit Wasserdampf wird der Feuchtigkeitsgehalt des pflanzlichen Samengutes auf 2 bis 6 % über den Feuchtigkeitsgehalt des nichtgequollenen Gutes eingestellt. Beispielsweise liegt der Feuchtigkeitsgehalt der Kaffeebohnen vor der Quellbehandlung mit Wasserdampf bei etwa 12 %. Durch den Quellvorgang erhöht sich die Feuchtigkeit je nach Behandlungsdauer auf etwa 15 bis 17 %. Bei Kaffeebohnen ist es nun bevorzugt, daß durch den Trocknungsvorgang der Feuchtigkeitsgehalt auf etwa 1 bis 2 % über dem Feuchtigkeitsgehalt des Originalzustandes nach Entfernung der Silberhäutchen eingestellt wird.

In der dritten Stufe des erfindungsgemäßen Verfahrens werden die beim Trocknungsvorgang abgelösten Samenschalen entfernt. Gemäß der bevorzugten Ausführungsform der Erfindung werden die Samenschalen während des Trocknungsvorganges durch das einströmende aufbereitete Trockenmittel, das besonders in Form von pulsierendem Trockenmittel vorliegt, aus dem Trockner herausgetragen und über Zyklone von dem Trockenmittel abgetrennt. Eine Abtrennung der Samenschalen vom Samengut kann jedoch generell auch außerhalb des Trockners in geeigneten Anlagenteilen erfolgen, wie z. B. in Windsichtern.

Das erfindungsgemäße Verfahren eignet sich zur schonenden und restlosen Entfernung der Samenschalen von pflanzlichem Samengut. Vorzugsweise wird das erfindungsgemäße Verfahren bei der Entfernung der Silberhäutchen von Rohkaffe verwendet. Die hierbei auftretenden Vorteile sind nachfolgend zusammengestellt.

1) Verbesserung der Veredelung des Kaffees durch Vermeidung fest anhaftender Häutchenreste.

2) Vermeidung von Filterproblemen, die durch die Silberhäutchen hervorgerufen werden.

3) Erleichterung und Verbesserung der Lösungsmittelextraktion bei der Entcoffeinierung und der Entfernung wachsartiger Auflagerungen, wobei keine Verklebungsprobleme mehr auftreten, eine gleichmäßigere Durchströmung des Lösungsmittels durch die Kaffeeschüttung gewährleistet ist und die Randgängigkeit vermindert wird.

4) Keine Verstopfung von Leitungen, Öffnungen, Zyklonen, Vakuumanlagen und Förderpumpen.

Auch bei der Herstellung von Röstkaffee liefert das durch das erfindungsgemäße Verfahren erhaltene Produkt die folgenden Vorteile:

1) Immissionsverminderung von Schadstoffen gegenüber üblichen Anlagen.

2) Verminderung des Aufwandes der Abluftreinigung durch Reduzierung des belästigenden Geruches, der durch Verbrennung der Häutchen beim Röstvorgang hervorgerufen wird.

3) Einsparung von Energie, da die Häutchen, die etwa
0,3 bis 0,8 Gew.-% der Kaffeebohne ausmachen, nicht
mitgeröstet zu werden brauchen.

4) Vermeidung von aus Samenschalenresten entstandenem
Kaffeestaub, der zu Staubexplosionen führen kann.

5) Erhöhen der Betriebssicherheit durch Verhinderung
von Glutnestern, die in den Zyklonen durch die
angekohlten Häutchen gebildet werden können.

6) Keine Beeinträchtigung des Kaffeearomas durch Verkohlung der Silberhäutchen, was zu einem scharfen und
bitteren Geschmack des Kaffees führen kann.

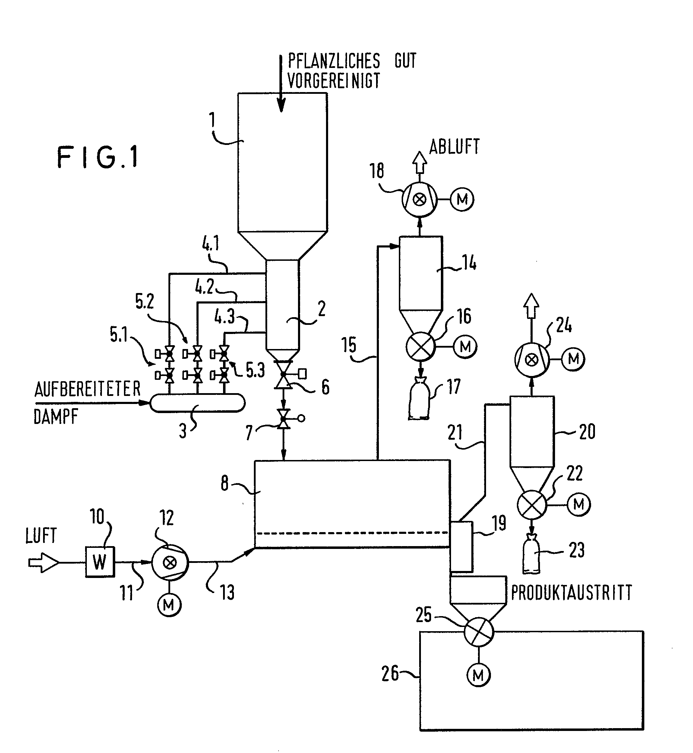

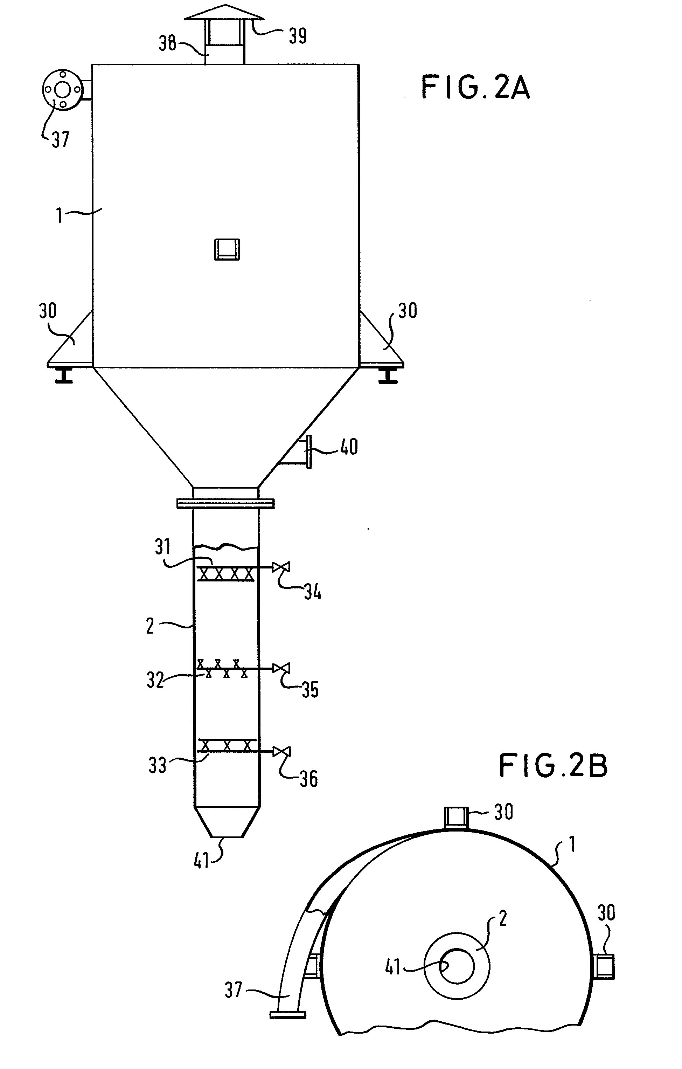

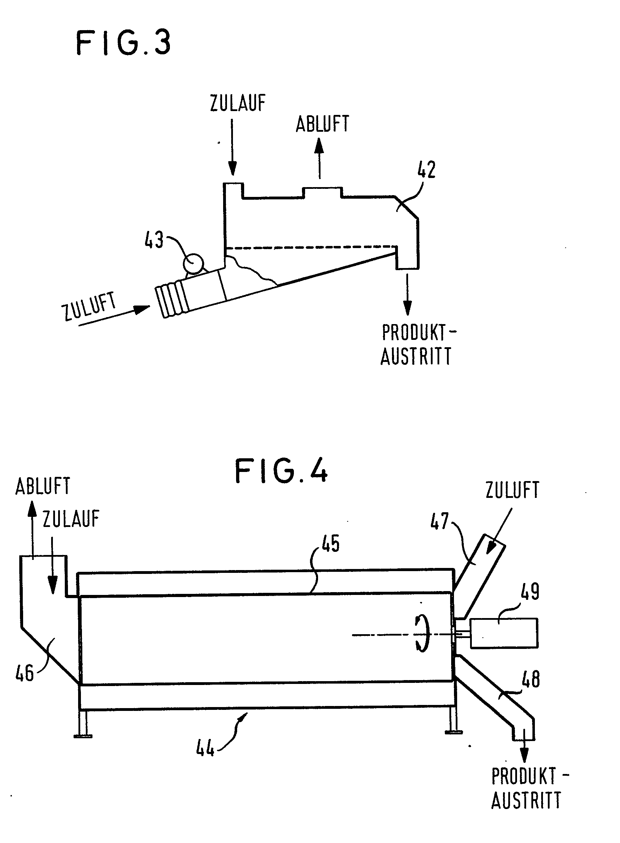

Im Nachfolgenden wird eine Vorrichtung zur Durchführung
der bevorzugten Ausführungsform des erfindungsgemäßen
Verfahrens unter Bezugnahme auf die Fig. 1 bis 4 näher
erläutert.

Fig. 1 zeigt eine Anlage zur Durchführung des erfindungsgemäßen Verfahrens,

Fig. 2a zeigt ein Dämpfungsrohr mit Einfüllbehälter in
Schnittansicht,

Fig. 2b zeigt ein Dämpfungsrohr in der Draufsicht,

Fig. 3 zeigt einen Fließbett-Trockner mit Pulsator,

Fig. 4 zeigt einen Trommeltrockner.

Das zu behandelnde Gut, beispielsweise gereinigter Rohkaffee, wird in einen Einfüllbehälter 1 eingebracht.
Das Gut rutscht in ein Dämpfungsrohr 2, in dem das

0066897

Pflanzengut mit Wasserdampf behandelt wird. Der Wasserdampf wird aus einer Wasserdampfaufbereitungsanlage geliefert und über einen Verteiler 3, Leitungen 4.1; 4.2 und 4.3 und Reduzierventile 5.1; 5.2; usw. in das Dämpfungsrohr eingeführt. Die Dampfbeaufschlagung findet an drei verschiedenen Stellen des Dämpfungsrohrs 2 statt, um eine möglichst rasche und gleichmäßige Benetzung des Pflanzengutes zu ermöglichen. Die ausreichende Bedampfungszeit zur Anquellung der Samen wird durch die Absperr- und Dosiereinrichtungen 6,7 eingestellt. Über diese Armaturen gelangt das Samengut in einen Trockner 8. In den Trockner wird nun aufbereitete Luft eingeblasen. Die aufbereitete Luft durchströmt einen Lufttrockner und/oder Luftvorerwärmer 10, der über eine Leitung 11 mit einem Ventilator 12 und über eine Leitung 13 mit dem Trockner 8 verbunden ist. Die Samenschalen werden zusammen mit der Luft über die Leitung 15 in einen Zyklon 14 ausgetragen, in dem eine Trennung der Samenschalen von der Luft erfolgt. Die im Zyklon 14 abgetrennten Samenschalen werden durch eine Schleuse 16 in einen Sack 17 ausgetragen. Die Luft kann über einen zusätzlichen Ventilator 18 angesaugt werden. Das getrocknete und nun schon weitgehend von Samenschalen befreite Samengut gelangt in einen Windsichter 19, aus dem mit Luft die restlichen Samenschalen über die Leitung 21 in einen Zyklon 20 ausgetragen werden. Nach Abtrennung der restlichen Samenschalen im Zyklon 20 werden sie über eine Schleuse 22 in einem Sack 23 aufgefangen. Die gereinigte Abluft strömt über den Ventilator 24 nach außen. Das von Samenschalen befreite Produkt wird über eine Schleuse 25 aus dem Windsichter 19 in einen Auffangbehälter 26 ausgetragen.

Gemäß einer bevorzugten Ausführungsform der erfindungsgemäßen Vorrichtung liegt der Trockner 8 in Form eines Fließbett-Trockners 42 vor, der mit einem Pulsator 43 zur Erzeugung eines pulsierenden Luftstroms verbunden ist. Durch die kurzzeitigen Verwirbelungen des Produkts entsteht ein intensiver Reinigungseffekt. Als Trockner 8 kann auch ein Trommeltrockner 44 verwendet werden, der aus einer Trommel 45, einer Öffnung 46 für den Zutritt des zu trocknenden Gutes und zum Abführen der Abluft, einer Luftzulaßleitung 47, einer Austrittsöffnung 48 für das getrocknete Gut und einem Antrieb 49 für die Trommel besteht.

Die Dämpfeinrichtung besteht vorzugsweise aus einem Einfüllbehälter 1 mit Tragpratzen 30, einem Dämpfungsrohr 2, Lanzetten 31, 32, 33 für die Dampfbeaufschlagung, Dampfeinlaßventile 34, 35, 36, einem Einfüllstutzen 37, einem Auslaßstutzen 38 mit einer Regenhaube 39, einem Anschlußstutzen 40 zur Füllstandsmessung und einer Auslaßöffnung 41.

Die erfindungsgemäße Vorrichtung arbeitet im kontinuierlichen und im Chargenbetrieb.

Die Erfindung wird durch die folgenden Beispiele näher erläutert:

## Beispiel 1

In der vorstehend beschriebenen Anlage wurde eine Charge von 8 Tonnen Kaffee verarbeitet. Der Anfangsfeuchtigkeitsgehalt der Kaffeebohnen lag bei 12,1 % $H_2O$. Der Kaffee wurde dann mit 390 kg Wasserdampf bei einer Temperatur von 148°C und einem Druck von 4 bar im Dämpfungsrohr behandelt. Der angequollene Kaffee verläßt das Dämpfungsrohr mit etwa 60°C und die Bohnen wiesen einen Feuchtigkeitsgehalt von 16,1 % auf. Die

0066897

angequollenen Kaffeebohnen wurden zum Trockner 8 gefördert, in den aufbereitete, pulsierende Luft eingeblasen wurde. Vor Eintritt in den Trockner betrug die Lufttemperatur 80°C und die relative Luftfeuchtigkeit ca. 3,0 %. Die Behandlungsdauer war 8 Minuten. Der Häutchenanfall im Hauptabscheider betrug 22,9 kg und im Windsichter 1,3 kg, d. h. zusammen 24,2 kg.

Bei den angegebenen Bedingungen erfolgte keine Taupunkt-Unterschreitung, und es konnte eine vollständige Entfernung der Häutchen erreicht werden. Der nach dem erfindungsgemäßen Verfahren erhaltene Kaffee wurde wie üblich geröstet und organoleptisch geprüft. Die Prüfung ergab, daß die Tassenqualität gegenüber üblich verarbeitetem Kaffee verbessert war. Außerdem wurde eine besonders gleichmäßige Röstfarbe der Bohnen erhalten.

## Beispiel 2

In der vorstehend beschriebenen Anlage wurde eine Charge von 6 Tonnen Kaffeebohnen verarbeitet. Die Anfangsfeuchte des Kaffees betrug 11,6 %. Der Kaffee wurde im Verdampfungsrohr mit 290 kg Wasserdampf bei einem Druck von 3,5 bar und einer Temperatur von 140°C behandelt. Der Kaffee verließt das Dämpfungsrohr mit einer Temperatur von etwa 55°C. Die Feuchtigkeit der Kaffeebohne hatte auf 15,4 % zugenommen. Die angequollenen Kaffeebohnen wurden anschließend in einem Trockner mit pulsierender Luft behandelt. Die zugeführte Luft hatte eine Temperatur von 85°C und besaß eine relative Luftfeuchtigkeit von ca. 2,0 %. Die Behandlungsdauer war 5 Minuten. Bei den angegebenen Bedingungen gab es keine Taupunkt-Unterschreitung, so daß es auch keine Probleme bei der Entfernung der Häutchen in den nachfolgenden Anlagen gab. Der Häutchenanfall im Hauptabscheider betrug 20,3 kg und im Windsichter 0,9
kg. Der nach dem erfindungsgemäßen Verfahren gewonnene
Kaffee hatte eine verbesserte Tassenqualität gegenüber
üblich verarbeitetem Kaffee und eine gleichmäßige
Röstfarbe.

<u>Beispiel 3</u>

In einer vorstehend beschriebenen, kleintechnischen
Anlage wurde eine Charge von 1 kg Mandeln verarbeitet.
Die Mandeln wurden im Verdampfungsrohr mit Wasserdampf
bei einem Druck von 2,2 bar und einer Temperatur von
126°C behandelt. Die angequollenen Mandeln wurden anschließend in einem Trommeltrockner unter Zufuhr
von aufbereiteter Luft getrocknet. Die Luft besaß
eine Temperatur von 70°C und eine relative Luftfeuchtigkeit von ca. 6,0 %. Die Behandlungsdauer war 9 Minuten. Der Samenschalenanfall im Hauptabscheider betrug 41 g und in einem nachgeschalteten Windsichter
ca. 5 g. Die Samenschalen waren vollständig von den
Mandeln abgetrennt und die Mandeln wiesen keinerlei Beschädigungen auf.

Patentansprüche

1. Verfahren zur Entfernung der Samenschalen von pflanzlichem Samengut, dadurch gekennzeichnet, daß man die Randzonen des pflanzlichen Samengutes mit Dampf anquillt und dadurch die Samenschalen anreißt, danach das Samengut durch schnelles Trocknen schrumpft und die sich dabei ablösenden Samenschalen gleichzeitig und/oder in einem späteren Verfahrensschritt entfernt.

2. Verfahren nach Anspruch 1, dadurch gekennzeichnet, daß als Dampf Wasserdampf, Lösungsmitteldampf oder deren Gemische eingesetzt werden.

3. Verfahren nach Anspruch 1 oder 2, dadurch gekennzeichnet, daß der Dampf gesättigt bis leicht überhitzt vorliegt.

4. Verfahren nach Anspruch 1, dadurch gekennzeichnet, daß man die Trocknung bei gleichzeitiger Entfernung der Samenschalen durch geeignete Trockenmittel in Konvektionstrocknern durchführt, wobei die Zeit der Behandlung mit Trockenmittel (Behandlungszeit), die Trockenmittelgeschwindigkeit und die Temperatur des Trockenmittels mit der Maßgabe aufeinander abgestimmt werden, daß eine restlose Entfernung der Samenschale erfolgt und daß keine Taupunkt-Unterschreitung eintritt.

5. Verfahren nach Anspruch 4, dadurch gekennzeichnet, daß die Trocknung in Trocknern durchgeführt wird, in denen das Samengut in ungeordnete Bewegung versetzt wird.

6. Verfahren nach Anspruch 4 oder 5, dadurch gekennzeichnet, daß die Trocknung in einem Fließbetttrockner mit pulsierendem Trockenmittel durchgeführt wird.

7. Verfahren nach einem der Ansprüche 4 bis 6, dadurch gekennzeichnet, daß man eine Behandlungszeit von 2 bis 30 Minuten und eine Temperatur von 10 bis 150°C einhält.

8. Verfahren nach Anspruch 7, dadurch gekennzeichnet, daß man eine Behandlungszeit von 5 bis 10 Minuten und eine Temperatur von 60 bis 90°C einhält.

9. Verfahren nach Anspruch 1, dadurch gekennzeichnet, daß die Trocknung durch Brüdenabzug aus Kontakt- und/oder Strahlungstrocknern erfolgt und anschließend außerhalb der Trockner in einem Windsichter und/oder durch pneumatische Förderung die Abtrennung der Samenschalen vom Samengut erfolgt.

10. Vorrichtung zur Durchführung des Verfahrens nach einem der vorhergehenden Ansprüche, gekennzeichnet durch einen Einfüllbehälter (1) zur Aufnahme des Samengutes, ein Dämpfungsrohr (2) zum Dämpfen und Quellen des Pflanzengutes, einen Verteiler (3) zur Aufnahme von aufbereitetem Dampf aus einer Dampfaufbereitungsanlage, Leitungen (4.1; 4.2 und 4.3), die den Verteiler (3) über Dampfreduzierventile (5.1; 5.2; usw.) mit dem Dämpfungsrohr (2) verbinden, Absperr- und Dosiereinrichtungen (6, 7) zur Weiterleitung des Samengutes in einen Trockner (8), einen Trockner und/oder Vorwärmer für das Trockenmittel (10), der über eine Leitung (11) mit einem Ventilator (12) und über eine Leitung (13) mit dem Trockner (8) verbunden ist, einen Zyklon (14) zur Trennung von Samenschalen und Trockenmittel, der über eine Leitung (15) mit dem Trockner (8) verbunden ist, eine Schleuse (16) zum Austragen der Samenschalen
in einen Sack (17), ggf. einen Ventilator (18) zum
unterstützenden Abführen des samenschalenhaltigen
Trockenmittels aus dem Trockner, einen dem Trockner
nachgeschalteten Windsichter (19) zur Entfernung restlicher Samenschalen, einen Zyklon (20) zur Trennung
von Samenschalen und Trockenmittel, der über eine
Leitung (21) mit dem Windsichter (19) verbunden ist,
eine Schleuse (22) zum Austragen der Samenschalen in
einen Sack (23), einen Ventilator (24) zur Erzeugung
des erforderlichen Transportstromes und eine Schleuse
(25) zum Austragen des aus dem Windsichter (19) austretenden Samengutes in einen Auffangbehälter (26).

11.    Vorrichtung nach Anspruch 10, gekennzeichnet
durch einen Einfüllbehälter (1) mit Tragpratzen (30),
ein Dämpfungsrohr (2), Lanzetten (31, 32, 33) für die
Dampfbeaufschlagung, Dampfeinlaßventile (34, 35, 36),
einen Einlaßstutzen (37) für das Samengut, einen
Auslaßstutzen (38) mit einer Regenhaube (39), einen
Anschlußstutzen (40) zur Füllstandsmessung und eine
Auslaßöffnung (41) für das Samengut.

12.    Vorrichtung nach Anspruch 10, dadurch gekennzeichnet, daß der Trockner (8) ein Fließbetttrockner (42)
ist, der mit einem Pulsator (43) zur Erzeugung eines
pulsierenden Trockenmittelstroms versehen ist.

13.    Vorrichtung nach Anspruch 10, dadurch gekennzeichnet, daß der Trockner (8) ein Trommeltrockner (44)
ist, der aus einer Trommel (45), einer Öffnung (46) für
den Zutritt des zu trocknenden Samengutes und zum Abführen des Trockenmittels, einer Trockenmittelzuführleitung (47), einer Austrittsöffnung (48) für das
getrocknete Samengut und einem Antrieb (49) für die
Trommel besteht.

FIG.1

PFLANZLICHES GUT
VORGEREINIGT

ABLUFT

AUFBEREITETER
DAMPF

LUFT

PRODUKTAUSTRITT

0066897

FIG.2A

FIG.2B

# FIG.3

ZULAUF

ABLUFT

42

43

ZULUFT

PRODUKT-
AUSTRITT

# FIG.4

ABLUFT

ZULAUF

ZULUFT

47

45

49

46

48

44

PRODUKT-
AUSTRITT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-C- 469 526 (J.A. THOMPSON, W.S. HOUGH) <br> * Insgesamt * <br><br> --- | 1-4,10 | A 23 N  5/00 |
| A | US-A-1 433 928 (G. BAXTER) <br> * Seite 1, Zeilen 88-110 * <br><br> --- | 1 | |
| A | FR-A-2 381 478 (COMPTOIRS INDUSTRIELS REUNIS BLACHERE & CIE.) <br><br> --- | | |
| A | GB-A- 295 515 (FRIED. KRUPP GRUSONWERK AG) <br><br> --- | | |
| A | DE-B-1 178 247 (J.W. GARDNER) <br><br> ----- | | |
| | | | **RECHERCHIERTE SACHGEBIETE (Int. Cl. ³)** <br><br> A 23 N |

Der vorliegende Recherchenbericht wurde für alle Patentansprüche erstellt.

| Recherchenort <br> DEN HAAG | Abschlußdatum der Recherche <br> 12-08-1982 | Prüfer <br> NEHRDICH H.J |
|---|---|---|